# EUROPÄISCHE PATENTANMELDUNG

(11) **EP 0 841 131 A1**
(43) Veröffentlichungstag der Anmeldung: **13.05.1998**
(21) Anmeldenummer: 97118957.6
(22) Anmeldetag: 30.10.1997
(51) Int. Cl.: B26D 7/26, B26D 7/20

(54) **Schneidvorrichtung mit Hubregelung**

(30) Priorität: 07.11.1996 DE 19645986; 30.04.1997 DE 19718436; 06.05.1997 DE 19719182
(71) Anmelder: Bullmer Spezialmaschinen GmbH, 72537 Mehrstetten (DE)
(72) Erfinder: Jung, Rolf, 72525 Münsingen (DE)
(74) Vertreter: Melzer, Wolfgang, Dipl.-Ing.

(57) **Zusammenfassung**

Die Erfindung betrifft eine Schneidvorrichtung (1) für das Schneiden von biegeschlaffem Material (12), wie z.B. von Stofflagen, Lederhäuten od.dgl.

Die Schneidvorrichtung (1) umfaßt einen Schneidtisch (3), dessen Tischfläche (14) eine Schneidunterlage (13) trägt, auf der das Material (12) ausgebreitet werden kann. Ferner ist ein Schneidkopf (5) vorgesehen, der über der Tischfläche (14) so angeordnet ist, daß er über diese bewegbar ist. An dem Schneidkopf (5) ist ein Schneidwerkzeug (10; 30) für den Eingriff durch Absenken in das Material (12) angeordnet, um dieses entsprechend einer Vorgabe schneiden zu können. Dabei durchdringt das Schneidwerkzeug (10; 30) das Material (12) vollständig und wirkt mit einer Schneidunterlage (13) zusammen.

Erfindungsgemäß sind eine Sensoranordnung (18, 19), mittels der der Abstand zwischen Schneidkopf (5) und Tischfläche (14) vorzugsweise berührungslos erfaßbar ist, und eine Steueranordnung (20) vorgesehen. Die Steueranordnung (20) regelt abhängig von dem gemessenen Abstand und der Art des Schneidwerkzeugs (10; 30) die Lage des Schneidkopfs (5) und das Eindringen des Schneidwerkzeugs (10; 30) in das Material (12) derart, daß bei vollständigem Eindringbewegungs-Hub des Schneidwerkzeugs (10; 30) dieses unabhängig vom dabei ausgeübten Anpreßdruck um ein vorgegebenes konstantes Maß in die Schneidunterlage (13) eindringt.

## Beschreibung

Die Erfindung betrifft eine Schneidvorrichtung für das Schneiden von biegeschlaffem Material, wie z.B. Stofflagen, Lederhäuten od.dgl..

Eine gattungsgemäße Schneidvorrichtung umfaßt einen Schneidtisch, dessen Tischfläche eine Schneidunterlage trägt, auf der das Material ausgebreitet werden kann. Ferner ist ein Schneidkopf vorgesehen, der über der Tischfläche so angeordnet ist, daß er über diese bewegbar ist. Ein an dem Schneidkopf vorgesehenes Schneidwerkzeug wird durch Absenken in Eingriff mit dem zu schneidenden Material gebracht, um dieses entsprechend einer Vorgabe zu schneiden. Dabei durchdringt das Schneidwerkzeug das zu schneidende Material vollständig und dringt in die Schneidunterlage ein.

Als Schneidunterlage wird bei herkömmlichen Vorrichtungen dieser Art ein Werkstoff verwendet, das geeignet ist durch den Andruck des Schneidwerkzeuges, häufig ein Schneidrad, auf die Schneidunterlage das darauf liegende Schneidgut zu durchtrennen. Dabei kann das Schneidwerkzeug mehr oder weniger in die Schneidunterlage eindringen, etwa diese ebenfalls schneiden und/oder diese elastisch verformen. Die Schneidunterlage liegt üblicherweise auf einem Tisch, wobei sehr häufig die Schneidunterlage und das darauf liegende Schneidgut durch Vakuumansaugung gegen den Tisch gehalten werden. Wesentlich bei derartigen Vorrichtungen ist, daß zum einen das Schneidwerkzeug stets das zu schneidende Schneidgut durchdringt, jedoch nicht die Schneidunterlage selbst bis zu deren Auflage durchdringt, da bei zu starkem Eindringen in die Schneidunterlage das Schneidwerkzeug brechen könnte oder an dem Tisch zerstört werden könnte. Herkömmlich wird der von dem Schneidwerkzeug auf das Schneidgut bzw. die Schneidunterlage ausgeübte Druck erfasst und ausgehend davon der das Schneidwerkzeug tragende Schneidkopf in seiner Höhenlage verstellt. Es ist jedoch erforderlich, abhängig von dem jeweiligen Schneidgut und der Dicke des jeweiligen zu schneidenden Schneidgutes den Druck jeweils gesondert einzustellen, der als der für die Nachführung verwendete Solldruck anzusehen ist. Ferner ist auch zu berücksichtigen, daß unterschiedliche Werkzeuge aufgrund ihrer unterschiedlichen Ausgestaltung auch unterschiedliche Schneidwiderstände verursachen, weshalb auch abhängig davon der entsprechende Solldruck jeweils neu eingestellt werden muß Die Druckeinstellung jedoch ist ziemlich aufwendig und kompliziert. Bei Materialien, deren Festigkeit und deren Dicke sich ändert, etwa bei Leder, ist eine entsprechende Einstellung des Solldruckes nur bedingt möglich. Somit kann bei den Vorrichtungen nach dem Stand der Technik nicht sichergestellt werden, daß das Schneidgut stets sicher durchtrennt ist, jedoch das Schneidwerkzeug nicht zu tief in die Schneidunterlage eindringt.

Die Eindringtiefe der Schneidköpfe bekannter Schneidvorrichtungen kann in Abhängigkeit von dem zu schneidenden Material z.B. durch eine variierbare Gewichtsbelastung oder eine variierbare Federvorspannung so eingestellt werden, daß das Schneidwerkzeug mit einer gewissen Eindringtiefe in die Materialauflage eindringt.

Bei einer zu geringen Eindringtiefe besteht die Gefahr, daß das zu schneidende Material nicht vollständig durchtrennt wird oder nicht sauber geschnitten wird.

Wenn das Schneidwerkzeug hingegen zu tief in die Schneidunterlage eindringt, besteht der Nachteil eines vorzeitigen Verschleißes der Schneidunterlage infolge der sich bildenden tiefen Schneidrillen. Weiterhin besteht bei einem zu tiefen Eintauchen des Schneidwerkzeugs in die Schneidunterlage die Gefahr eines Messerbruchs, was in der Praxis insbesondere beim Schneiden enger Radien häufig vorkommt. Die damit verbundene Rüstzeit zum Wechseln des Schneidwerkzeugs erhöht die Produktionskosten erheblich.

Ein weiterer Nachteil besteht darin, daß bei ständig wechselnden unterschiedlichen zu schneidenden Materialien, deren Strukturen und Materialstärken und somit deren Schneidwiderstände erheblich variieren, der Anpreßdruck des Schneidmessers bei jedem Materialwechsel neu eingestellt werden müßte, um eine gleichbleibende Eindringtiefe zu erhalten. Dies ist in der Praxis mit vertretbarem Aufwand nicht möglich. Als weiteres Problem kommt hinzu, daß der Schneiddruck und somit die Eindringtiefe in die Schneidunterlage sich in Abhängigkeit von der Schärfe der Schneide zusätzlich ändert.

Bei Verwendung eines Schneidkopfs mit mehreren Schneidwerkzeugen besteht des weiteren das Problem, daß die unterschiedlichen Schneidwerkzeuge aufgrund ihrer unterschiedlichen Ausbildung unterschiedliche Widerstände beim Durchdringen des zu schneidenden Materials erfahren, was eine unterschiedliche Einstellung des Anpreßdrucks für die unterschiedlichen Werkzeuge erforderlich macht.

Ausgehend hiervon ist es Aufgabe der Erfindung eine Vorrichtung nach dem Stand der Technik dahin weiterzuentwickeln, daß ein sicherer Betrieb möglich ist.

Die Aufgabe wird durch die Merkmale des Anspruches 1 gelöst.

Die Erfindung wird durch die Merkmale der Unteransprüche weitergebildet.

Der Erfindung liegt die Erkenntnis zugrunde, daß die Schneidvorrichtung vorteilhaft mit einer Sensoranordnung versehen werden kann, um den Abstand zwischen dem Schneidkopf und der Tischfläche, vorzugsweise berührungsfrei, zu messen. Auf der Grundlage dieses gemessenen Abstands kann eine Steueranordnung die Eindringtiefe des Schneidwerkzeugs in das zu schneidende Matrial so einregeln, daß bei vollständigem Eindringbewegungs-Hub des Schneidwerkzeugs dieses unabhängig von dem dabei ausgeübten Anpreßdruck um ein vorgegebenes, konstantes Maß in die Schneidunterlage eindringt. Wesentlich ist also, daß der Höhenabstand des Schneidkopfes und damit des Schneidwerkzeuges gegenüber der Auflage, auf der die Schneidunterlage aufliegt ständig und laufend erfasst wird. Hierdurch kann die Eindringtiefe des Schneidwerkzeuges in die Schneidunterlage zehntelmillimetergenau eingestellt werden, wodurch zum einen die Schneidunterlage geschont wird und zum anderen das Schneidgut stets und sicher durchtrennt wird. Durch die genau einstellbare Eindringtiefe kann auch gewährleistet werden, daß das Schneidwerkzeug, insbesondere ein Schneidmesser, auch bei relativ kleinen Radien nicht brechen kann. Hierdurch werden die Lebensdauer des Schneidwerkzeuges und auch der Schneidunterlage stark erhöht. Außerdem ist eine Neueinstellung bei Wechseln des Werkzeuges nicht erforderlich, vielmehr kann der Schneidkopf nach Art eines Revolvingsystems mehrere Werkzeuge tragen, die auch zum Schneiden von Markierungen oder zum Schneiden von Löchern oder zum Vornehmen anderer bei dem jeweiligen Schneidgut erforderlicher Maßnahmen geeignet sind. Die die Ausbildung der Schneidunterlage als förderbares Band betreffenden Merkmale erlauben vorbereitende bzw. nachbereitende Handlungen (Auflegen von Schneidgut vor bzw. Abräumen geschnittenen Gutes nach dem Tisch), während auf dem Tisch zugeschnitten wird und/oder schnellen Austausch verbrauchter Schneidunterlagen ohne wesentliche Unterbrechung des Betriebes.

Entsprechend Anspruch 2 kann auf der Tischfläche unterhalb der Schneidunterlage eine Reflexionsschicht aus einem elektromagnetische Strahlung reflektierenden Material, insbesondere aus Metall, angeordnet sein, wobei die Sensoranordnung den Abstand auf der Grundlage der von der Reflexionsschicht reflektierten elektromagnetischen Strahlung erfaßt. Als geeignete elektromagnetische Strahlung kommt insbesondere Mikrowellenstrahlung in Betracht.

Entsprechend Anspruch 3 kann der Schneidtisch eine Vakuumkammer umfassen und in der Tischfläche können Öffnungen vorgesehen sein, um das zu schneidende Material anzusaugen. Auf diese Weise ergibt sich eine gleichmäßige, rutschfeste Anlage des zu schneidenden Materials auf der Tischfläche. Entsprechend Anspruch 4 kann die Schneidunterlage aus einem porösen, luftdurchlässigen Material bestehen, so daß das Vakuum durch die Schneidunterlage nicht unterbrochen wird. In entsprechender Weise kann die Reflexionsschicht entsprechende Öffnungen aufweisen und insbesondere als Lochblech ausgebildet sein, so daß der von der Vakuumkammer ausgeübte Unterdruck von der Reflexionsschicht ebenfalls nicht unterbrochen wird.

Entsprechend Anspruch 6 können an dem Schneidkopf mehrere Schneidwerkzeuge vorgesehen sein, was einen schnellen Wechsel der Schneidwerkzeuge ermöglicht. Entsprechend Anspruch 7 kann die Eintauchtiefe des Schneidwerkzeugs justierbar sein, um die optimale Eindringtiefe einstellen zu können. Während des Betriebs der Schneidvorrichtung wird die Eindringtiefe dann von der erfindungsgemäßen Sensoranordnung und Steueranordnung auf das einmal eingestellte, optimale Maß fortwährend eingeregelt.

Die Schneidunterlage kann entsprechend Anspruch 8 vorzugsweise aus einem zäh-harten Kunststoffmaterial gefertigt sein. Die Schneidunterlage kann entsprechend Anspruch 9 gleichzeitig als Transportband zum Zu- und Abfördern des zu schneidenden Materials dienen. Vorteile weiterer Ausgestaltungen sind weiter unten erläutert.

Die Erfindung wird nachfolgend anhand bevorzugter Ausführungsbeispiele unter Bezugnahme auf die Zeichnung näher beschrieben. In der Zeichnung zeigen:
- Fig. 1: eine Aufsicht auf die erfindungsgemäße Schneidvorrichtung in einer schematischen Darstellung;
- Fig. 2: eine Seitenansicht eines ersten Ausführungsbeispiels einer erfindungsgemäßen Schneidvorrichtung in teilweise geschnittener Darstellung; und
- Fig. 3: eine Seitenansicht eines zweiten Ausführungsbeispiels einer erfindungsgemäßen Schneidvorrichtung in einer teilweise geschnittenen Darstellung;
- Fig. 4: einen Teilschnitt durch den Tisch gemäß Fig. 1;
- Fig. 5: in Aufsicht eine Ausführungsform eines Tisches;
- Fig. 6: eine Ausführungsform einer Lochplatte;
- Fig. 7 bis 9: verschiedene Ausführungsformen von Weiterbildungen der Schneidunterlage.

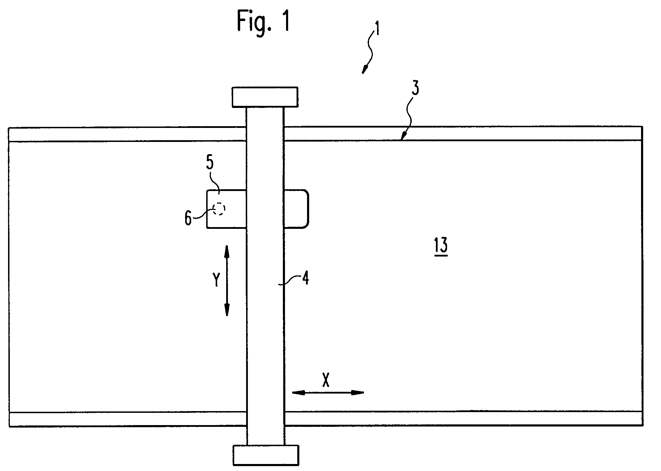

Fig. 1 zeigt eine Aufsicht auf eine Schneidvorrichtung 1, an welcher die erfindungsgemäße Weiterbildung zum Einsatz kommt. Die Schneidvorrichtung besteht aus einem Schneidtisch 3, dessen Tischfläche eine Schneidunterlage 13 trägt. Die Schneidunterlage 13 besteht vorzugsweise aus einem zäh-harten Kunststoffmaterial, wie z.B. Polyvinylchlorid (PVC), Polyvinylidenchlorid, Polyäthylen und/oder Polypropylen, und kann entweder stationär angeordnet sein oder gleichzeitig als bewegbares Transportband zum Zu- und Abfördern des zu schneidenden Materials dienen. An einer in x-Richtung bewegbaren Schneidbrücke 4 ist ein Schneidkopf 5 in y-Richtung bewegbar befestigt. Ein an dem Schneidkopf 5 angeordnetes, in Fig. 1 lediglich schematisch dargestelltes Schneidwerkzeug 6 ist auf diese Weise über die gesamte Tischfläche 3 bewegbar.

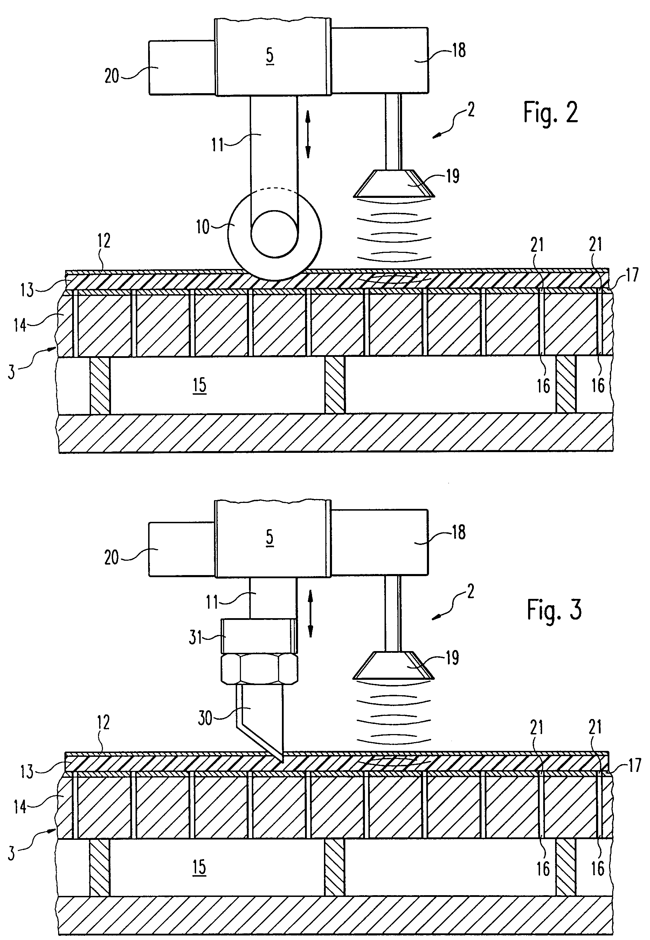

Fig. 2 zeigt ein erstes Ausführungsbeispiel der erfindungsgemäßen Schneidvorrichtung 1 in einer teilweise geschnittenen Seitendarstellung. Zu erkennen ist der Schneidkopf 5, an welchem ein als Schneidrad 10 ausgebildetes Schneidwerkzeug über ein Verbindungselement 11 befestigt ist. Das Schneidrad 10 ist an dem Verbindungselement 11 vorzugsweise in einem Kugellager drehbar gelagert. Durch Beaufschlagung mit einem in horizontaler Richtung wirkenden Anpreßdruck durchdringt das Schneidrad 10 das zu schneidende Material 12 und dringt um ein vorgegebenes Maß in die Schneidunterlage 13 ein. Das Schneidrad 10 führt während des Schneidvorgangs eine Rollbewegung aus, so daß das zu schneidende Material 12 entsprechend einem vorgegebenen Schnittmuster geschnitten wird. Die Koordinatenposition des Schneidrads 10 ist durch Verfahren der Schneidbrücke 4 und des an der Schneidbrücke 4 angeordneten Schneidkopfes 5 entsprechend dem zu schneidenden Schnittmuster kontinuierlich verstellbar. Das Verbindungselement 11 kann dabei so zu verdreht werden, daß das Schneidrad 10 bezüglich der Schneidlinie stets tangential ausgerichtet ist.

Um das zu schneidende Material 12 gegenüber der Tischfläche 14 in seiner Lage zu fixieren und somit eine gleichmäßige Anlage des zu schneidenden Materials 12 auf dem Schneidtisch 3 zu gewährleisten und ein Verrutschen des zu schneidenden Materials 12 während des Schneidvorgangs zu vermeiden, verfügt der Schneidtisch 3 über eine Vakuumkammer 15, die mit einer nicht dargestellten Vakuumquelle in an sich bekannter Weise verbunden ist. In der Tischfläche 14 sind z.B. als Bohrungen ausgebildete Öffnungen 16 vorgesehen, an die sich durch eine noch zu beschreibende Reflexionsschicht 17 hindurch bis unterhalb der Schneidunterlage 13 erstreckende Öffnungen 21 anschließen. Die Reflexionsschicht 17 kann insbesondere auch als Lochblech ausgebildet sein. Die Schneidunterlage 13 ist vorzugsweise aus einem porösen, luftdurchlässigen Material ausgebildet, so daß die Unterseite des zu schneidenden Materials 12 in der beabsichtigten Weise mit dem Unterdruck beaufschlagt wird.

Die optimale Eindringtiefe des im Ausführungsbeispiel der Fig. 2 als Schneidrad 10 ausgebildeten Schneidwerkzeugs ist zum einen dadurch festgelegt, daß das zu schneidende Material 12 sicher und vollständig durchtrennt wird und andererseits eine unnötig tiefe Rillenbildung in der Schneidunterlage bereits vermieden wird.

Die optimale Eindringtiefe des Schneidwerkzeugs 10 kann über eine nicht dargestellte Justiervorrichtung eingestellt werden. Entsprechend der erfindungsgemäßen Weiterbildung sind Maßnahmen vorgesehen, um die einjustierte, optimale Eindringtiefe des Schneidwerkzeugs 10 während des gesamten Schneidvorgangs auf das optimale konstante Maß einzuregeln. Dazu weist der Schneidkopf 5 einen im Ausführungsbeispiel eine Sende- und Empfangsvorrichtung 18 aufweisenden Sensor 2 auf. Die Sende- und Empfangsvorrichtung 18 strahlt im Ausführungsbeispiel elektromagnetische Strahlung in Richtung auf die vorzugsweise aus Metall gefertigte Reflexionsschicht 17 aus und empfängt die von der Reflexionsschicht 17 reflektierte elektromagnetische Strahlung. Als elektromagnetische Strahlung eignet sich vorzugsweise Mikrowellenstrahlung z.B. im Wellenlängenbereich einiger Zentimeter oder Dezimeter. Die Mikrowellenstrahlung kann durch die Sende- und Empfangsantenne 19 in Richtung auf die Reflexionsschicht 17 emittiert werden. Durch Auswertung der von der Reflexionsschicht reflektierten Strahlung läßt sich in an sich bekannter Weise der Abstand zwischen der Sende- und Empfangsantenne 19 und der Reflexionsschicht 17 ermitteln. Aus diesem gemessenen Abstand läßt sich die Eindringtiefe der Unterkante des Schneidrads 10 in die Schneidunterlage 13 berechnen.

Ist die auf diese Weise ermittelte Ist-Eindringtiefe größer als die vorgegebene oder einjustierte Soll-Eindringtiefe, so wird das Schneidrad 10 durch eine durch den Doppelpfeil angedeutete Hubeinrichtung so weit angehoben, bis die erfaßte Ist-Eindringtiefe mit der vorgegebenen Soll-Eindringtiefe übereinstimmt. Ist andererseits die erfaßte Ist-Eindringtiefe geringer als die vorgegebene Soll-Eindringtiefe, so wird durch die Hubeinrichtung das Schneidrad 10 so weit abgesenkt, bis die erfaßte Ist-Eindringtiefe mit der vorgegebenen Soll-Eindringtiefe übereinstimmt. Für den vorstehend beschriebenen Steuervorgang ist in dem Schneidkopf 5 eine entsprechende Steueranordnung 20 vorgesehen.

Fig. 3 zeigt ein zweites Ausführungsbeispiel der erfindungsgemäßen Schneidvorrichtung in einer teilweise geschnittenen Seitendarstellung. Die bereits anhand von Fig. 2 beschriebenen Komponenten sind mit übereinstimmenden Bezugszeichen versehen, so daß sich eine diesbezügliche wiederholende Beschreibung erübrigt.

Anstelle des in Fig. 2 dargestellten Schneidrades 10 ist bei dem in Fig. 3 dargestellten Ausführungsbeispiel ein Ziehmesser 30 vorgesehen. Das Ziehmesser 30 kann zur Verbesserung der Schneidwirkung in vertikale, hochfrequente, kurze Schwingungen versetzt werden, die vorzugsweise im Ultraschall-Frequenzbereich liegen. Die Ultraschall-Schwingungen können z.B. durch einen zwischen dem Verbindungselement 11 und dem Ziehmesser 30 angeordneten Ultraschall-Oszillator 31 erzeugt werden. Die von der erfindungsgemäßen Steueranordnung 20 geregelte Eindringtiefe bezieht sich dabei auf die maximale Eindringtiefe bei vollständigem Eindringbewegungs-Hub des in vertikaler Richtung oszillierenden Ziehmessers 30.

Das Ziehmesser 30 wird von dem in x- und y-Richtung bewegbaren Schneidkopf 5 entlang der durch das Schnittmuster vorgegebenen Schneidlinie gezogen, wobei das Ziehmesser 30 so weit in die Schneidunterlage 13 eindringt, daß das Durchtrennen des zu schneidenden Materials 12 sicher gewährleistet ist. Die Messung des Abstands der Sende- und Empfangsantenne 19 von der reflektierenden Schicht 17 und die auf dieser Messung basierende Erfassung der Eindringtiefe des unteren Endes des Ziehmessers 30 in der Schneidunterlage 13 bei vollständigem Eindringbewegungs-Hub des in vertikaler Richtung oszillierenden Ziehmessers 30 entsprechen vollständig der bereits anhand von Fig. 2 beschriebenen Vorgehensweise.

Mit der erfindungsgemäß weitergebildeten Schneidvorrichtung 1 ist es möglich, die Eindringtiefe des Schneidwerkzeugs auf ein vorgegebenes, konstantes Maß einzuregeln.

Auf diese Weise wird die Tiefe der von den Schneidwerkzeugen in der Schneidunterlage 13 gebildeten Rillen auf das notwendige Maß begrenzt und ein vorzeitiger Verschleiß der Schneidunterlage 13 verhindert. Ferner wird durch die nur geringe Eindringtiefe der Schneidwerkzeuge in der Schneidunterlage 13 ein Bruch des Schneidwerkzeugs verhindert, was bei dem in Fig. 3 dargestellten Ziehmesser 30 von besonderer Wichtigkeit ist. Auch das Schneiden von engen Radien kann ohne die Gefahr eines Messerbruchs erfolgen. Der erfindungsgemäße Regelmechanismus ist darüberhinaus unabhängig von der Beschaffenheit, insbesondere der Stärke und der Struktur des zu schneidenden Materials 12 und ist des weiteren unabhängig von dem Anpreßdruck, mit welchem das Schneidwerkzeug angepreßt wird.

Die in den Fig. 2 und 3 dargestellten Ausführungsbeispiele können auch dahingehend kombiniert werden, daß an einem Schneidkopf 5 sowohl ein Schneidrad 10 als auch ein Ziehmesser 30 vorgesehen sind, wobei das Schneidmesser 7 beispielsweise zum Schneiden von Markierungen oder von Löchern verwendbar ist, während das Schneidrad 6 zum Schneiden des Schneidguts gemäß einem Schnittmuster geeignet ist.

Je nach den Anforderungen der zu schneidenden Schneidlinie können die Werkzeuge automatisch gegeneinander ausgewechselt werden. Die erfindungsgemäße Regelvorrichtung sorgt dabei bei jedem Schneidwerkzeug für die jeweils optimale Eindringtiefe. Des weiteren kann z.B. auch ein Stanzwerkzeug alternativ oder zusätzlich einem Schneidkopf 5 vorgesehen sein. Das sogenannte Revolvingsystem kann hier verwendet werden.

Wenn die Schneidunterlage 13 als Transportband ausgebildet ist, weist diese vorzugsweise sehr feine, z.B. mit einem Laser gebohrte Löcher auf, damit die Schneidunterlage 13 luftdurchlässig ist. Ferner muß das Transportband innerhalb der gesamten Anlage luftdicht gekapselt sein, um das Vakuum wirksam zu machen.

Die Vakuumkammer 15 kann auch in einzelne Unterkammern unterteilt sein, wobei das Vakuum in Abhängigkeit von der Position des Schneidwerkzeugs 10 bzw. 30 nur in derjenigen Unterkammer aufgebaut wird, über der sich das Schneidwerkzeug 10 bzw. 30 gerade befindet.

Der Schneidkopf 5 trägt also einen Sensor 2, der dazu bestimmt ist, den Abstand des Schneidkopfes 5 von der Unterseite der Schneidauflage 13 bzw. der Oberseite der Reflexionsschicht 17 berührungslos zu erfassen. Bei Verwendung einer Lochplatte oder eines Lochblechs ist zweckmäßig der Wirkquerschnitt des Sensors 2 so bestimmt, daß er größer ist als ein Loch der Lochplatte, so daß die Abstandserfassung unabhängig davon möglich ist, ob sich der Sensor 2 über einem Loch des Lochbleches oder über einem Materialabschnitt des Lochbleches befindet. Gemäß üblicher Praxis wird der Schneidkopf 13 mittels eines Hub- oder Verstellmotors (nicht dargestellt) höhenverstellt. Abhängig von dem Ausgangssignal des Sensors 2, also dem Ist-Höhenabstand des Schneidkopfes 5 über dem Lochblech kann der Verstellmotor so angesteuert werden, daß dieser Ist-Höhenabstand einem Soll-Höhenabstand entspricht, der wiederum der gewünschten Eindringtiefe des Schneidwerkzeuges 10, 30 in die Schneidunterlage 13 entspricht, um sicherzustellen, daß zum einen das Schneidgut 12 durchtrennt wird, zum anderen jedoch das Schneidwerkzeug 10, 30 nicht unnötig tief in die Schneidunterlage 13 eindringt. Da mittels handelsüblicher Sensoren, die zu dieser Höhenerfassung herangezogen werden können, eine Erfassung im Zehntel-Millimeter-Bereich möglich ist, kann auch eine entsprechende Einstellung der Höhenlage des Schneidkopfes 5 gegenüber der Schneidunterlage 13 bzw. der Reflexionsschicht 17 sichergestellt werden. Die Höhenverstellung mittels einer Nachführung erfolgt unabhängig davon, ob das Schneidgut 12 in seiner Dicke oder seiner Materialfestigkeit Schwankungen unterliegt oder sich der Abstand zur Reflexionsschicht 17 beispielsweise auch durch Unebenheiten ändert, die in der Reflexionsschicht 17 und deren Aufliegen auf dem Tisch 14 bedingt sind. Die Nachführung ist auch unabhängig davon, ob die Schneidunterlage 13 selbst in ihrer Dicke Schwankungen unterliegt. Hierdurch ist die Eindringtiefe zehntelmillimetergenau einstellbar, die Schneidunterlage 13 wird geschont, das Schneidgut 12 wird sicher durchtrennt und das Schneidwerkzeug 10, 30 kann auch aufgrund zu tiefen Eindringens in die Schneidunterlage 13 nicht mehr brechen. Hierdurch wird die Lebensdauer des Schneidwerkzeuges 10, 30 und der Schneidunterlage 13 stark erhöht. Auch ist eine getrennte Einstellung bezüglich unterschiedlicher Werkzeuge 10, 30, unterschiedlicher Schneidgüter 12, unterschiedlicher Schneidunterlagen 13, nicht mehr erforderlich.

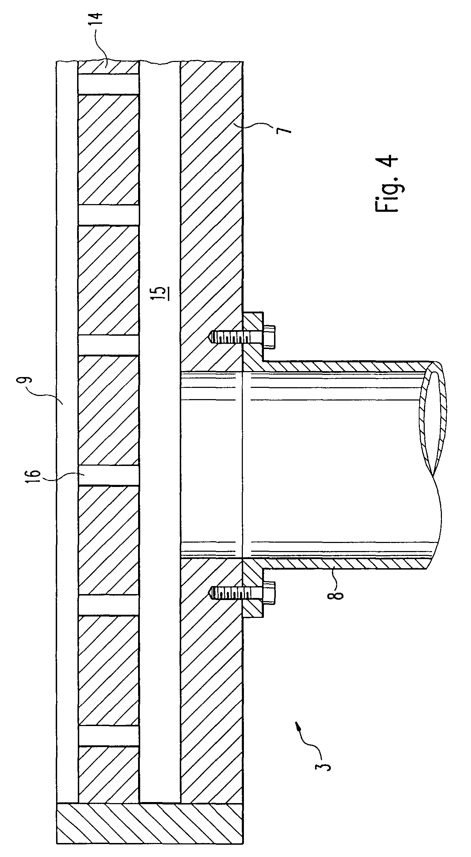

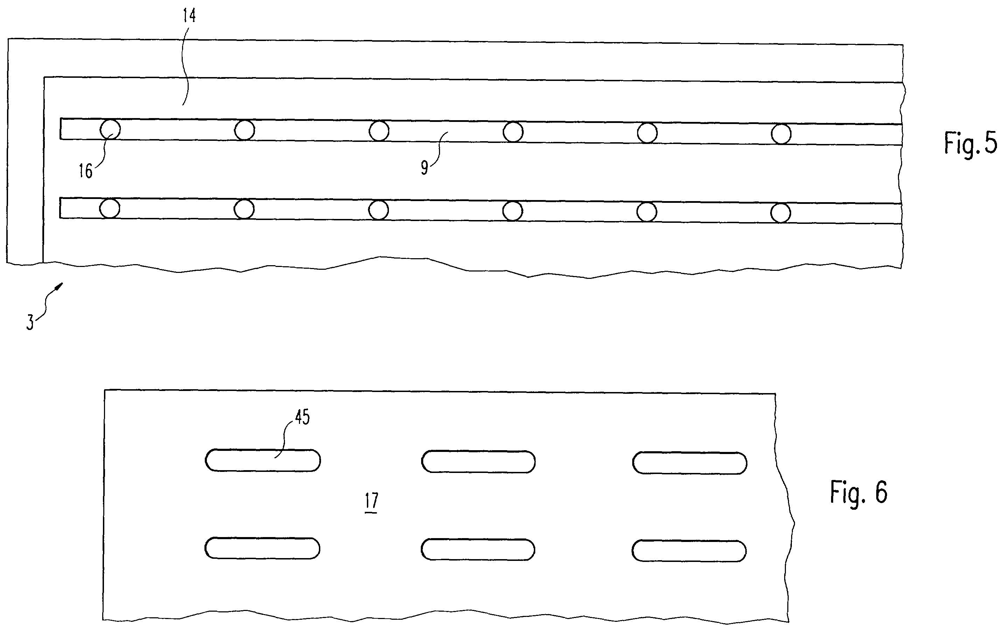

Der Aufbau des Tisches wird anhand Fig. 4 näher erläutert. Der Tisch 3 ist als Kasten ausgebildet mit einem innenliegenden Hohlraum 15 und mit einer Deckenwand 14, die zum einen Bohrungen 16 aufweist und zum anderen in seiner Oberseite Nuten 9 eingefräst enthält, auf denen wiederum das Lochblech als Reflexionsschicht 17 zur Auflage kommt. Über Anschlußstutzen 8 in einer Bodenwand 7 kann ein Anschluß an eine Vakuumpumpe (nicht dargestellt) erfolgen, so daß ein Unterdruck in dem Hohlraum 15 erzeugt wird, wobei dieser Unterdruck über die Bohrungen 16, die Nuten 9 und das Lochblech auf die Schneidunterlage 13 und, wenn diese durchlässig ist, auf das Schneidgut 12 einwirken kann und so eine Fixierung des Schneidguts 12 zumindest jedoch der Schneidunterlage 13 auf dem Tisch 3 sicherstellt. Fig. 5 zeigt, daß die Bohrungen 16 in die Nuten 9 münden und sich die Nuten 9 in Längsrichtung über den Tisch 3 erstrecken. Fig. 6 zeigt eine mögliche Ausführungsform eines Lochbleches als Reflexionsschicht 17, wobei der Abstand der verschiedenen Langlöcher 45 an den Abstand der Nuten 9 und der Bohrungen 16 im Tisch 3 angepaßt ist. Jedoch kann auch ein anderes mehr gitterförmiges Plattenelement statt des Lochbleches gemäß Fig. 6 verwendet werden. Es zeigt sich, daß auch mehr als eine Lage des Schneidguts 12 auf diese Weise geschnitten werden kann, wenn das Schneidgut 12 selbst luftdurchlässig ist und durch eine luftundurchlässige Folie überdeckt wird, wie das an sich bekannt ist. Jedoch werden herkömmliche Vorrichtungen der geschilderten Art üblicherweise zum Schneiden von einlagigem Schneidgut 12 verwendet.

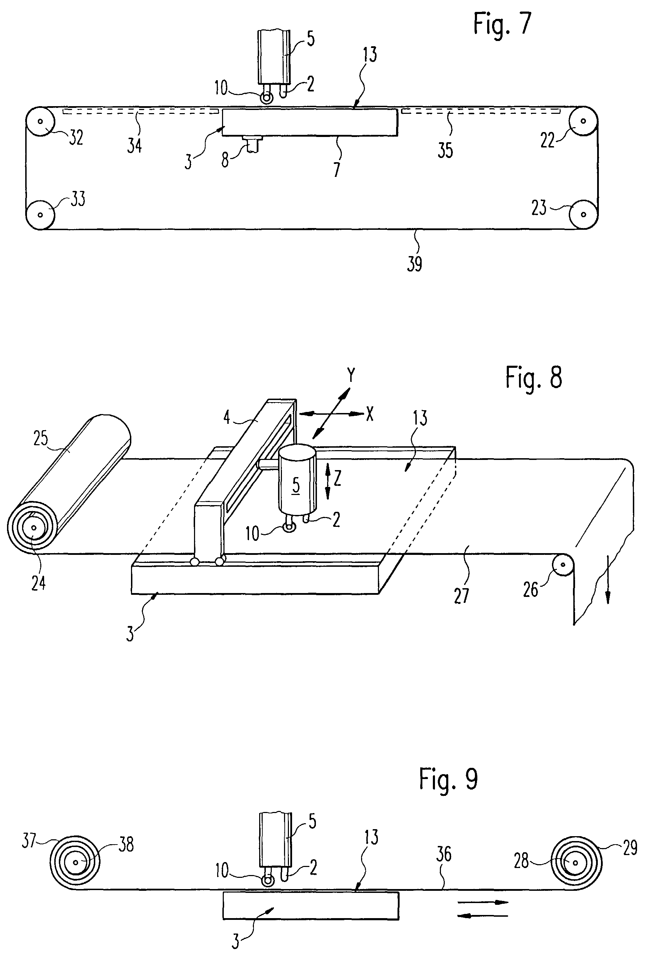

Den Weiterbildungen gemäß Fig. 7 bis 9 liegt die grundsätzliche Idee zugrunde, die Schneidunterlage 13 als förderbares Band auszubilden.

Gemäß Fig. 7 ist ein umlaufendes Transportband 39 vorgesehen, das über Walzen 22, 23, 32 und 33 geführt ist, von denen mindestens eine angetrieben ist (nicht dargestellt). In dem Abschnitt des Transportbandes 39, der auf den Tisch 3 aufliegt, ist die Schneidunterlage 13 definiert, auf der das Schneidgut 12 (nicht dargestellt) zur Auflage kommt und durch geeignete Steuerung des Schneidkopfes 5 geschnitten wird. Zweckmäßig wird das Transportband 39 zwischen der Walze 32 und dem Tisch 3 über ein starres Flächenelement 34 geführt und wird das Transportband 39 zwischen dem Tisch 3 und der Walze 22 über ein weiteres starres Flächenelement 35 geführt. Es ist dann möglich, im Bereich des starren Flächenelementes 34 zu schneidendes Schneidgut (nicht dargestellt) auf das Transportband 39 aufzulegen, während im Bereich des Tisches 3 geschnitten wird. Nach Beendigung des Schneidens im Bereich des Tisches 3 wird das Transportband 39 weitergefördert, derart, daß das geschnittene Schneidgut über das Flächenelement 35 gelangt und das im Bereich des Flächenelementes 34 neu aufgelegte Schneidgut in den Bereich des Tisches 3 gelangt. Während nun im Bereich des Tisches 3 wiederum geschnitten wird, kann das geschnittene Schneidgut im Bereich des Flächenelementes 35 abgeräumt werden.

Hierdurch wird nicht nur die Schneidunterlage 13 geschont, da die Schneid- bzw. Verformungsvorgänge auf mehrere Abschnitte des Transportbandes 39 verteilt werden, sondern auch die Arbeitsgeschwindigkeit erhöht, da vorbereitende Handlungen für einen künftigen Schnitt und nachbereitende Handlungen für einen vorhergehenden Schnitt gleichzeitig mit einem Schneidvorgang durchgeführt werden können.

Bei dem Ausführungsbeispiel gemäß Fig. 8 ist das förderbare Band als von einem Vorrat 25 abwickelbares Band 27 ausgebildet. Der Vorrat 25 ist dabei auf eine Walze 24 aufgewickelt. Vorbereitende bzw. nachbereitende Handlungen können in gleicher Weise durchgeführt werden, wie anhand von Fig. 2 erläutert. Das abgewickelte Ende des Transportbandes 27 jenseits einer Abwickelwalze 26 kann dabei einer Entsorgung zugeführt werden. Diese Ausführungsform ist besonders dann geeignet, wenn das abwickelbare Band 27 im Bereich des Tisches 3 einem erheblichen Verschleiß unterliegt und sehr häufig ausgewechselt werden muß, etwa wenn sehr kleine Schnittmuster geschnitten werden müssen und das Schneidwerkzeug in die Schneidunterlage 13 einschneidend eindringt.

Fig. 8 zeigt ferner eine perspektivische Darstellung, woraus hervorgeht, daß der Schneidkopf 5 an einer den Tisch 3 überspannenden Brücke 4 längs einer Koordinate y steuerbar verschiebbar gehalten ist, während die Brücke 4 ihrerseits wiederum längs des Tisches 3 in einer Koordinatenrichtung x steuerbar verschiebbar ist. Der Schneidkopf 5 wiederum ist längs der Koordinate z höhenverstellbar, wie das eingangs geschildert worden ist.

Fig. 9 zeigt eine weitere Ausführungsform, bei der das förderbare Band als hin- und herbewegbares Band 36 ausgebildet ist. In einer ersten Betriebsart wird dabei ein auf einer Walze 38 aufgewickelter Vorrat 37 dort abgewickelt und als Vorrat 29 auf einer Walze 28 wieder aufgewickelt, wobei in dem Bereich, in dem das Band 36 auf dem Tisch 3 aufliegt, die Schneidunterlage 13 definiert ist. Zweckmäßig erfolgt der Schneidvorgang mit Hilfe des Schneidkopfes 5 dann, wenn der Bewegungsvorgang des Bandes 36 stillgesetzt ist, es sind jedoch auch Betriebsweisen denkbar, in denen das Band 36 schrittweise oder kontinuierlich über den Tisch 3 bewegt wird. Entscheidend ist, daß das aufliegende Schneidgut während des Schneidvorganges sicher in Lage gehalten wird und der Schneidkopf 5 in den x- und y-Koordinatenrichtungen entsprechend gesteuert wird. Auch hier können die vorbereitenden bzw. nachbereitenden Handlungen, wie anhand Fig. 7 erläutert, durchgeführt werden (nicht im einzelnen dargestellt). Dieses Ausführungsbeispiel eignet sich zum Beispiel dann, wenn das Schneidgut größer ist als die Fläche des Tisches 3 und/oder wenn beim Schneidvorgang die Schneidunterlage 13 noch nicht so beeinträchtigt wird, daß sie bereits entsorgt werden müßte, also eine mehrmalige Benutzung möglich ist, allerdings nicht so wenig beeinträchtigt wird, als daß sich betriebswirtschaftlich ein umlaufendes Transportband 39, wie anhand von Fig. 7 erläutert, lohnen würde.

## Patentansprüche

1. Schneidvorrichtung (1) für das Schneiden von biegeschlaffem Material (12), wie z.B. Stofflagen, Lederhäuten od.dgl.,
mit einem Schneidtisch (3), dessen Tischfläche (14) eine Schneidunterlage (13) trägt, auf der das Material (12) ausgebreitet werden kann,
mit einem Schneidkopf (5), der über der Tischfläche (14) so angeordnet ist, daß er über diese bewegbar ist,
mit zumindest einem Schneidwerkzeug (10; 30) am Schneidkopf (5) für den Eingriff durch Absenken in das Material (12), um dieses entsprechend einer Vorgabe schneiden zu können, wobei das Schneidwerkzeug (10; 30) das Material (12) vollständig durchdringt und mit der Schneidunterlage (13) zusammenwirkt, insbesondere in diese geringfügig eindringt,
**gekennzeichnet durch**
eine Sensoranordnung (18, 19), mittels der der Abstand zwischen Schneidkopf (5) und Tischfläche (14) erfaßbar ist, und
eine Steueranordnung (20), die abhängig von dem gemessenen Abstand und der Art des Schneidwerkzeugs (10; 30) die Lage des Schneidkopfs (5) und das Eindringen des Schneidwerkzeugs (10; 30) in das Material (12) derart regelt, daß bei vollständigem Eindringbewegungs-Hub des Schneidwerkzeugs (10; 30) dieses unabhängig vom dabei ausgeübten Anpreßdruck um ein vorgegebenes, konstantes Maß in die Schneidunterlage (13) eindringt.

2. Schneidvorrichtung nach Anspruch 1,
**dadurch gekennzeichnet,**
daß auf der Tischfläche (14) unterhalb der Schneidunterlage (13) eine Reflexionsschicht (17) aus einem elektromagnetische Strahlung reflektierenden Material, insbesondere aus Metall, angeordnet ist und
daß die Sensoranordnung (18, 19) den Abstand auf der Grundlage der von der Reflexionsschicht (17) reflektierten elektromagnetischen Strahlung erfaßt.

3. Schneidvorrichtung nach Anspruch 1 oder 2,
**dadurch gekennzeichnet,**
daß der Schneidtisch (3) eine Vakuumkammer (15) umfaßt und in der Tischfläche (14) Öffnungen (16) vorgesehen sind, um das zu schneidende Material (12) anzusaugen.

4. Schneidvorrichtung nach Anspruch 3,
**dadurch gekennzeichnet,**
daß die Vakuumkammer (15) in mehrere Unterkammern unterteilt ist und das Vakuum in Abhängigkeit von der Position des Schneidwerkzeugs (10; 30) nur in derjenigen Unterkammer aufgebaut wird, über der sich das Schneidwerkzeug (10; 30) befindet.

5. Schneidvorrichtung nach Anspruch 3 oder 4,
**dadurch gekennzeichnet,**
daß die Schneidunterlage (13) aus einem porösen, luftdurchlässigen Material besteht.

6. Schneidvorrichtung nach einem der Ansprüche 3 bis 5 und Anspruch 2,
**dadurch gekennzeichnet,**
daß die Reflexionsschicht (17) Öffnungen (21) aufweist, die mit den Öffnungen (16) der Tischfläche (14) verbunden sind.

7. Schneidvorrichtung nach einem der Ansprüche 1 bis 6,
**dadurch gekennzeichnet,**
daß an dem Schneidkopf (5) mehrere Schneidwerkzeuge, insbesondere ein Schneidrad (10), ein Ziehmesser (30) und/oder ein Stanzwerkzeug, vorgesehen sind.

8. Schneidvorrichtung nach einem der Ansprüche 1 bis 7,
**dadurch gekennzeichnet,**
daß das bzw. die Schneidwerkzeug(e) in bezug auf die Eindringtiefe in die Schneidunterlage (13) justierbar ist bzw. sind.

9. Schneidvorrichtung nach einem der Ansprüche 1 bis 8,
**dadurch gekennzeichnet,**
daß die Schneidunterlage (13) aus einem zäh-harten Kunststoffmaterial, insbesondere aus Polyvinylchlorid (PVC), Polyvinylidenchlorid, Polyäthylen und/oder Polypropylen, besteht.

10. Schneidvorrichtung nach einem der Ansprüche 1 bis 9,
**dadurch gekennzeichnet,**
daß die Schneidunterlage (13) als förderbares Band zum Zu- und Abfördern des zu schneidenden Materials (12) ausgebildet ist.

11. Vorrichtung nach einem der Ansprüche 2 bis 10,
**dadurch gekennzeichnet,**
daß die Schneidunterlage (13) auf einem Blech aufliegt, der Sensor (2) am Schneidkopf (5) befestigt ist und der Sensor (2) durch das Schneidgut (12) und die Schneidunterlage (13) hindurch den Abstand von der Oberseite des Blechs erfasst.

12. Vorrichtung nach einem der Ansprüche 2 bis 11,
**dadurch gekennzeichnet,**
daß die Schneidunterlage (13) auf einer Gitter- oder Lochplatte aufliegt und der Sensor (2) so ausgelegt ist, daß er den Abstand von der Oberseite der Gitter- oder Lochplatte im wesentlichen ununterbrochen erfasst.

13. Vorrichtung nach Anspruch 12,
**dadurch gekennzeichnet,**
daß der Tisch (3) durch einen geschlossenen innen hohlen Kasten gebildet ist, wobei in der Oberseite dessen Deckenwand (14) Nuten (9) vorgesehen sind, die über Durchgangsöffnungen (21) mit dem inneren Hohlraum (15) des Kastens verbunden sind, wobei die Gitter- oder Lochplatte auf der Oberseite aufliegt und wobei der innere Hohlraum (15) mit einer Unterdruckerzeugungseinrichtung verbunden ist und wobei die Gitter- oder Lochplatte zumindest im wesentlichen biegesteif ist.

14. Vorrichtung nach einem der Ansprüche 1 bis 13,
**dadurch gekennzeichnet,**
daß die Höhenverstelleinrichtung einen Verstellmotor aufweist, dessen Ansteuereinrichtung das Sensorausgangssignal empfängt.

15. Vorrichtung nach einem der Ansprüche 10 bis 14,
**dadurch gekennzeichnet,**
daß das förderbare Band als umlaufendes Transportband (39) ausgebildet ist.

16. Vorrichtung nach einem der Ansprüche 10 bis 14,
**dadurch gekennzeichnet,**
daß das förderbare Band als von einem Vorrat (25) abwickelbares Band (27) ausgebildet ist.

17. Vorrichtung nach einem der Ansprüche 10 bis 14,
**dadurch gekennzeichnet,**
daß das förderbare Band als zwischen zwei Wickelwalzen (28, 38) hin- und herbewegbares und ab- bzw. aufwickelbares Band (36) ausgebildet ist.
